**Europäisches Patentamt**

**European Patent Office**

**Office européen des brevets**

(19)

(11) Veröffentlichungsnummer : **0 143 149**
**B1**

(12) **EUROPÄISCHE PATENTSCHRIFT**

(45) Veröffentlichungstag der Patentschrift :
21.01.87

(51) Int. Cl.⁴ : **C 02 F   3/28**

(21) Anmeldenummer : **84103684.1**

(22) Anmeldetag : **04.04.84**

(54) **Verfahren zur Reduzierung des H2S-Gehaltes bei anaeroben Abbauprozessen, insbesondere Schlammfaulverfahren.**

(30) Priorität : **29.09.83 DE 3335265**

(43) Veröffentlichungstag der Anmeldung :
**05.06.85 Patentblatt 85/23**

(45) Bekanntmachung des Hinweises auf die Patenterteilung : **21.01.87 Patentblatt 87/04**

(84) Benannte Vertragsstaaten :
**AT BE CH DE FR GB IT LI LU NL SE**

(56) Entgegenhaltungen :
**DE-C-   301 076**
**DE-C-   501 668**
**GB-A-   111 401**
**US-A- 4 053 396**

(73) Patentinhaber : **ABWASSERVERBAND RAUMSCHAFT LAHR**
**Rathausplatz 4**
**D-7630 Lahr/Schw. (DE)**

(72) Erfinder : **Gött, E.**
**Limbruchweg 14**
**D-7630 Lahr/Schw. (DE)**

(74) Vertreter : **Sternagel, Hans-Günther, Dr. et al**
**Patentanwälte Dr. Michael Hann Dr. H.-G. Sternagel**
**Sander Aue 30**
**D-5060 Bergisch Gladbach 2 (DE)**

**EP 0 143 149 B1**

Jouve, 18, rue St-Denis, 75001 Paris, France

**Beschreibung**

Die Erfindung richtet sich auf ein Verfahren zur Verringerung des $H_2S$-Gehaltes von Biogasen, die in anaerobiologischen Prozessen gewonnen werden, insbesondere für die Verringerung in Klärgasen, die in Faultürmen von Kläranlagen gewonnen werden.

In Schlammfaulräumen von Kläranlagen wird im Rahmen des Faulprozesses die Methangärung bewußt geführt, um damit von der möglichen Klärgasgewinnung Gebrauch zu machen.

Der Abbau der organischen Substanz im Klärschlamm geht dabei in drei Stufen vor sich. In der ersten Stufe werden hochmolekulare Stoffe in organische Säuren, vorwiegend niedere Fettsäuren, umgewandelt, die in der zweiten Stufe durch acetogene Bakterien zu Essigsäure, $CO_2$ und $H_2$ umgesetzt werden. Aus diesen Produkten wird in der dritten Stufe durch methanogene Bakterien $CO_2$ und $CH_4$ gebildet. Der Faulprozeß erfolgt deshalb teilweise in saurem, teilweise in alkalischem Medium.

Die Menge des gewinnbaren Klärgases hängt von verschiedenen Faktoren ab, z. B. vom Anteil der organischen Substanz im Frischschlamm, von der Temperatur im Faulraum, von der Vermischung des frischen mit ausgefaultem Schlamm und schließlich vom industriellen Anteil im Frischschlamm, der fäulnishemmende Stoffe enthalten kann.

Je nach Schlammbeschaffenheit und Faulbehälterbetrieb können sich folgende Zusammensetzungen bei eingearbeiteten beheizten Faulräumen mit mittlerer Belastung ergeben :

| | | |
|---|---|---|
| Methan | 63-68 | % |
| Kohlendioxid | 32-37 | % |
| Stickstoff | 0-0,2 | % |
| Wasserstoff | 0-0,2 | % |
| Schwefelwasserstoff | 0-0,1 | % |

Enthält das aufzuarbeitende Abwasser Schwefelverbindungen, insbesondere Sulfate, steigt auch deren Gehalt im auszufaulenden Klärschlamm an. Die Schwefelverbindungen im Klärschlamm werden durch Bakterientätigkeit zum $H_2S$ abgebaut, so daß mit steigendem Gehalt an Schwefelverbindungen im Schlamm sich auch der Gehalt an Schwefelwasserstoff im Klärgas erhöht.

Schwefelwasserstoff weist eine akute Toxizität auf und wirkt sich ab Konzentrationen von 200 mg Schwefel pro Liter toxisch auf die Bakterienpopulation aus.

Außerdem wirkt $H_2S$ in Faultürmen und nachgeschalteten Anlagen ausgesprochen korrosiv. Deshalb dürfen bei Verwertung in Gasmotoren oder zu Heizzwecken bestimmte Toleranzwerte nicht überschritten werden.

Zur Verringerung des $H_2S$-Gehaltes von Klärgasen wurden deshalb bisher Entschwefelungsanlagen vorgesehen. Unabhängig von den dadurch entstehenden höheren Kosten und den erforderlichen Zusatzaggregaten wird die korrosive Wirkung des gebildeten $H_2S$ im Faulturm und unmittelbar nachgeschalteten Aggregaten durch eine Entschwefelung des Klärgases nicht beseitigt.

Aufgabe der Erfindung ist es, ein Verfahren zur anaeroben Schlammfaulung bzw. zum anaeroben Abbau organisch belasteter Abwässer zu schaffen, bei dem auch bei erhöhtem Gehalt an Schwefelverbindungen im Frischschlamm bzw. im Abwasser ein nahezu $H_2S$-freies Biogas gewonnen wird.

Diese Aufgabe wird gelöst durch ein Verfahren zur anaeroben Schlammfaulung bzw. zum anaeroben Abbau organisch belasteter Abwässer unter Gewinnung von Biogas, das als Hauptbestandteil Methan enthält. Dieses Verfahren ist dadurch gekennzeichnet, daß zusammen mit dem Frischschlamm ober mit dem Abwasser eine solche Menge an Sauerstoff mit eingebracht wird, daß im sich bildenden Biogas ein Restsauerstoffgehalt von 0,01 bis 3,0 Vol.%, vorzugsweise 0,1 bis 1,5 Vol.%, enthalten ist. Ganz besonders bevorzugt ist ein Gehalt von 0,5 bis 1,5 Vol.% oder von 0,1 bis 0,8 Vol.% Restsauerstoff. Vorzugsweise wird der Sauerstoff mittels Luft eingebracht.

Völlig überraschend wurde gefunden, daß die Anwesenheit geringer Mengen an Sauerstoff den anaeroben Abbauprozeß bei dem die organische Substanz zu Kohlendioxid und Methan abgebaut wird, nicht beeinträchtigt, jedoch auch bei hohen Gehalten an Schwefelverbindungen, insbesondere Sulfaten, im Schlamm bzw. im Abwasser die Bildung von $H_2S$ verhindert wird.

Als organische Schwefelverbindungen kommen schwefelhaltige Naturstoffe, Proteine und Stoffwechselprodukte, wie sie z. B. in Schlachthöfen und landwirtschaftlichen Betrieben, in Brennereien und Hefefabriken anfallen sowie organische Schwefelverbindungen, wie sie in Abwässern der Chemischen Industrie, insbesondere bei der Herstellung von pharmazeutischen Wirkstoffen, Schädlingsbekämpfungsmitteln, Farbstopffen und petrochemischen Produkten enthalten sind, in Betracht. Anorganische Schwefelverbindung sind beispielsweise Sulfate.

Der aus aeroben Aufbereitungsstufen kommende eingedickte Frischschlamm enthält je nach Zusammensetzung deraufzubereitenden Abwässer organische Substanzen, aus denen pro Kilogramm etwa 490 bis 500 Liter Klärgas durch eine anaerobe Faulung gewonnen werden können.

Der Abbau der organischen Substanz erfolgt ohne Stabilisierung unter pH-Wert-Erniedrigung, so daß zur Stabilisierung und Einhaltung des für die Methanbildung optimalen pH-Wertes von 7 bis 7,2 eine periodische Zufuhr von Alkali in den faulenden Schlamm erforderlich ist. Bei hohen Gehalten an Schwefelverbindungen, insbesondere Sulfaten, in industriellen Abwässern, die bis zu 40 000 ppm* erreichen können, entsteht unter den Bedingungen der mesophilen Faulung bei 30 bis 35 °C durch die Einwirkung der Bakterien Schwefelwasserstoff.

Auch die Anwesenheit von Bakterien, die Schwefelwasserstoff zu elementarem Schwefel umwandeln können, verhindert die Bildung von $H_2S$ unter den Faulbedingungen nicht in ausreichendem Maße. Die Anwesenheit derartiger Bakterien wie beispielsweise die farblosen Beggiatoa, Thiotrix, Thionema und rote Schwefelbakterien sind im Gegenteil eine Indikation dafür, daß unter den Bedingungen der Faulung erhebliche Mengen an Schwefelwasserstoff entstehen.

In einer kommunalen Kläranlage mit zwei hintereinander geschalteten anaerob betriebenen Faultürmen wurde in periodischen Abständen die Zusammensetzung des aus beiden Türmen gewonnenen Klärgases untersucht und in Langzeitproben folgende Zusammensetzung gefunden :

| | |
|---|---|
| $CO_2$ | 35,5-35,9 Vol.% |
| $O_2$ | 0 Vol.% |
| CO | 0 Vol.% |
| $N_2$ ungefähr | 0,2 Vol.% |
| $H_2$ | 0,1-0,2 Vol.% |
| $CH_4$ | 63,5-64,5 Vol.% |

Der $H_2S$-Gehalt lag bei 312 mg pro $m^3$ Klärgas. Durch Veränderung der Zusammensetzung der Abwässer stieg der Wert auf 800-850 mg pro $m^3$ an. Eine Analyse des aus dem zweiten Faulturm stammenden Gases ergab $H_2S$-Gehalte von 3 000 bis 4 000 mg pro $m^3$, so daß bei korrespondierend gezogenen Kurzproben im Gesamtgas Gehalte von über 1 000 mg $H_2S$ pro $m^3$ gefunden wurden.

Der Anstieg des $H_2S$-Gehaltes im Klärgas gegenüber früheren Langzeitbeobachtungen konnte eindeutig auf einen höheren Sulfatgehalt der anfallenden Abwässer zurückgeführt werden.

Erfindungsgemäß wurde in beide Faultürme zusammen mit dem kontinuierlich eingetragenen Schlamm bis zu 30 l/pro Kg organische Trockensubstanz in der Zufuhr an Luft eingetragen, wobei dem Turm I eine geringere Menge an Luft zugeführt wurde als dem Turm II. Nach Einstellen eines stabilen Betriebszustandes wurden folgende Analysenwerte des Gases gemessen :

| Komponente | | Turm I | | Turm II |
|---|---|---|---|---|
| | | 1. Messung | /2. Messung | |
| $CO_2$ | Vol.% | 35,5 | 34,0 | 31,5 |
| $O_2$ | Vol.% | 0,0 | 0,0 | 0,5 |
| $CH_4$ | Vol.% | 63,2 | 64,2 | 62,0 |
| Rest | Vol.% | 1,2 | 1,8 | 6,0 |
| $H_2S$ | $mg/m^3$ | 170 | 180 | Spuren |

Im Rahmen einer Versuchsfahrt wurde dem Turm II zusätzlich zum Schlamm direkt sulfathaltiges Abwasser mit einem Gesamtsulfatgehalt von 14 kg/m3 zugeführt und der Turminhalt umgewälzt. Das anfallende Gas aus Turm II wurde laufend untersucht und dabei folgende Meßergebnisse erhalten :

Turm II

| Zeit | $10^{30}$ | $10^{50}$ | $11^{00}$ | $11^{30}$ | $12^{00}$ | $12^{30}$ | $13^{00}$ |
|---|---|---|---|---|---|---|---|
| $CO_2$ Vol.% | 30,5 | 30,3 | 30,3 | 30,8 | 31,0 | 31,0 | 30,5 |
| $CH_4$ Vol.% | 62,0 | 62,5 | 62,3 | 61,0 | 60,0 | 60,0 | 59,0 |
| $O_2$ Vol.% | 0,4 | 0,3 | 0,3 | 0,4 | 0,5 | 0,5 | 0,5 |
| Rest Vol.% | 7,1 | 6,9 | 7,1 | 7,8 | 8,5 | 8,5 | 10,0 |
| $H_2S$ $mg/m^3$ | 130 | 140 | 123 | 118 | 105 | 110 | 85 |

Zum Vergleich wurde eine Kontrollfahrt ausgeführt, wobei die Sauerstoffzufuhr unterbrochen wurde und auch kein mit Sulfat stark verunreinigtes Abwasser gezielt zugeführt wurde, so daß die Sulfatbe-

* « ppm » bedeutet « parts per million ».

lastung des Frischschlammes im Rahmen der möglichen Langzeitkonzentration dieser Kläranlage lag, wobei jedoch zu berücksichtigen ist, daß der Kläranlage ständig über das kommunale Netz mit Sulfat beziehungsweise Schwefelverbindungen belastete Abwässer zugeführt werden.

Bei der Untersuchung des Gases auf Qualität und $H_2S$-Gehalt wurden folgende Analysenwerte erhalten:

| Komponente | | Turm I | | Turm II | |
|---|---|---|---|---|---|
| | | 1.Messung | 2.Messung | 1.Messung | 2.Messung |
| $CO_2$ | Vol.% | 37,5 | 37,8 | 28,2 | 28,0 |
| $O_2$ | Vol.% | 0 | 0 | 0 | 0 |
| $CH_4$ +) | Vol.% | 62,3 | 62,0 | 71,5 | 71,8 |
| Rest +) | Vol.% | 0,2 | 0,2 | 0,3 | 0,2 |
| $H_2S$ | mg/m³ | 255 | 270 | 830 | 810 |

+) Das Restvolumen besteht überwiegend aus Stickstoff.

Dieser Vergleich zeigt, daß durch die erfindungsgemäße Einspeisung geringer Mengen Sauerstoff in Form von Luft der $H_2S$-Gehalt im Klärgas bei sonst nahezu gleichbleibender Zusammensetzung deutlich zurückgeht.

Bei der erfindungsgemäßen Fahrweise werden dem I. Turm kontinuierlich 60-70 m³ Frischschlamm im Laufe eines Tages zugeführt, wobei durch die Anlagengröße und durch die Abzugsmenge eine durchschnittliche Verweilzeit von etwa 30 Tagen im I. Turm eingehalten wird. Im II. Turm wird zum Ausfaulen eine mittlere Verweilzeit von 15 Tagen eingestellt. Durch die erfindungsgemäße Beaufschlagung des Frischschlammes beim Einführen in den Faulprozeß mit einer solchen Menge, daß unter Berücksichtigung der jeweils abbaubaren Menge organischer Trockensubstanz im eingebrachten Schlamm in Klärgas ein Restsauerstoffgehalt von 0,5 Vol.% verbleibt, verläuft der anaerobe Gärverlauf unter Abbau der organischen Substanzen zu Kohlendioxid und Methan in üblicher Weise, ohne daß dabei eine Umwandlung des Sulfats bzw. der Schwefelverbindungen in unerwünschtes freiwerdendes $H_2S$ Gas auftritt, auch wenn es sich um einen Schlamm handelt, der einen hohen Sulfat-bzw. Schwefelgehalt aufweist.

Bei ausschließlicher Beschickung eines halbtechnischen Versuchsfaulturms mit feststofffreien organisch belasteten Abwässern, die eine aus organischen (z. B. Methionin, Cystin) und anorganischen (z. B. Sulfate) Schwefelverbindungen resultierende Schwefelfracht von 750 mg Schwefel pro Liter aufwiesen, ergab sich bei einer Raumbelastung von 3 kg CSB/(m³ Faulraum · d) folgende Zusammensetzung des gebildeten Biogases:

| | | |
|---|---|---|
| $CO_2$ | Vol.% | 36,4 |
| $O_2$ | Vol.% | 0,005 |
| $CO$ | Vol.% | n.n. |
| $N_2$ | Vol.% | 1,1 |
| $H_2$ | Vol.% | 0,006 |
| $CH_4$ | Vol.% | 62,3 |
| $H_2S$ | mg/m³ | 1900 |

Durch Zudosierung von 0,9 Liter Luft pro Stunde bzw. 0,2 Liter Sauerstoff pro Stunde zum anaeroben Prozeß konnte der $H_2S$-Gehalt des Biogases innerhalb weniger Stunden unter die Nachweisgrenze gedrückt werden. Der $H_2S$-Gehalt des Biogases lag bei gleichbleibender kontinuierlicher Luftzufuhr auch bei weiterer Zugabe von Schwefelverbindungen in oben genannter Größenordnung unterhalb der Nachweisgrenze. Für das dabei gebildete Biogas, dessen Menge bei Luft- bzw. Sauerstoffzufuhr sogar geringfügig ansteigt, ergab sich folgende Zusammensetzung:

| | | |
|---|---|---|
| $CO_2$ | Vol.% | 36,5 |
| $O_2$ | Vol.% | 0,15 |
| $CO$ | Vol.% | n.n. |
| $N_2$ | Vol.% | 5,2 |
| $H_2$ | Vol.% | 0,005 |
| $CH_4$ | Vol.% | 58,1 |
| $H_2S$ | mg/m³ | n.n. |

Dieses Beispiel zeigt, daß durch die erfindungsgemäße Einspeisung von Luft bzw. Sauerstoff auch beim anaeroben Abbau von Abwässern, die organische und anorganische Schwefelverbindungen enthalten, die $H_2S$-Bildung wesentlich verringert wird.

Besonders vorteilhaft ist es, die Luft oder den Sauerstoff über eine Einspeisvorrichtung, beispielsweise nach dem Venturiprinzip direkt mit dem Schlamm bzw. Abwassereintrag einzusaugen, wobei die Luft- bzw. Sauerstoffmenge über ein Regelventil gesteuert wird.

Aus sicherheitstechnischen Gründen kann bei der Ausführung des erfindungsgemäßen Verfahrens das anaerobe System, beispielsweise der Faulturm mit Einrichtungen, zu einer kontinuierlichen Bestimmung des Methangehaltes, des $H_2S$-Gehaltes und des Sauerstoffgehaltes im Biogas ausgerüstet sein. Mittels entsprechender Regeleinrichtungen wird ein Gehalt von bis zu 3 Vol.% Sauerstoff im Biogas durch Regelung der Luft- bzw. Sauerstoffzufuhr eingestellt und durch Programmierung einer Sicherheitsschaltung bei einem Sauerstoffgehalt von z. B. 1,5 Vol.% ein Alarm ausgelöst, um die Zufuhr von weiterer Luft bzw. Sauerstoff in den Faulturm rechtzeitig zu unterbrechen. In analoger Weise wird die Luft- bzw. Sauerstoffzufuhr zu einem nachgeschalteten zweiten oder weiteren Faultürmen geregelt, wobei auch in diesem Falle die Zufuhr vorzugsweise durch Einsaugen in die Einspeiseleitung mittels eines Injektors nach dem Venturiprinzip erfolgt. Grundsätzlich ist es jedoch auch möglich, die Luft bzw. den Sauerstoff direkt in den Faulturm einzudosieren.

Durch die erfindungsgemäße Verfahrensführung des anaeroben Abbauverfahrens, vorzugsweise eines Schlammfaulverfahrens, wird der $H_2S$-Gehalt im Biogas soweit erniedrigt, daß auch bei hohem Gehalt an Schwefelverbindungen, insbesondere Sulfatgehalt des Schlammes bzw. des Abwassers eine getrennte Entschwefelung entfallen kann und das Biogas ohne weitere Reinigung der üblichen Verwendung zugeführt werden kann. Das erfindungsgemäße Verfahren hat den besonderen Vorteil, daß durch die Verringerung des sich bildenden freien $H_2S$ im Faulturm die Korrosion im Faulturm und nachgeschalteten Anlagen erheblich vermindert wird. Außerdem entfällt die Gefahr, daß der Faulprozeß durch die toxische Wirkung des Schwefelwasserstoffes Schaden nimmt. Zusätzlich wurde gefunden, daß die Tendenz zur pH-Wert-Erniedrigung während des Faulprozesses geringer ist, so daß weniger Alkali erforderlich ist, um die erforderliche alkalische Phase für die Zersetzung der organischen Stoffe zu Kohlendioxid und Methan aufrechtzuerhalten.

Mit dem erfindungsgemäßen Verfahren lassen sich anaerobe Abbauverfahren, insbesondere Schlammfaulverfahren, also besonders vorteilhaft ausführen, wobei eine solche Verfahrensführung sich nicht nur für die Faultürme anbietet, sondern auch zur Steuerung bakteriologischer anaerober Umwandlungen in langen Fließwegen von Schlämmen und Abwässern geeignet ist, sofern die Gefahr der $H_2S$-Bildung durch anaerobe Abbauprozesse besteht. Als solches sind neben dem ideal durchmischten Faulturm der Faulturm mit Schlammrückführung, der Anaerob-Filter bzw. Festbettreaktor mit integrierter Schlammabscheidung (Upflow anaerobic sludge blanket process) zu nennen.

## Patentansprüche

1. Verfahren zur anaeroben Schlammfaulung oder zum anaeroben Abbau organisch belasteter Abwasser unter Gewinnung von Biogas, das als Hauptprodukt Methan enthält, dadurch gekennzeichnet, daß zusammen mit dem Frischschlamm oder dem Abwasser eine solche Menge Sauerstoff miteingebracht wird, daß im sich bildenden Biogas ein Restsauerstoffgehalt von 0,01 bis 3,0 Vol.% enthalten ist.

2. Verfahren nach Anspruch 1, dadurch gekennzeichnet, daß der Sauerstoff mittels Luft eingebracht wird.

3. Verfahren nach Ansprüchen 1 oder 2, dadurch gekennzeichnet, daß man dem einer zweiten anaeroben Ausfaulstufe zugeführten Schlamm der ersten anaeroben Ausfaulstufe beim Einbringen nochmals Luft oder Sauerstoff in einer solchen Menge hinzufügt, daß auch das in der zweiten Faulstufe entstehende Biogas einen Restsauerstoffgehalt von 0,01 bis 3,0 Vol.% aufweist.

4. Verfahren nach Anspruch 1 bis 3, dadurch gekennzeichnet, daß der Restsauerstoffgehalt im Biogas 0,1 bis 1,5 Vol.% beträgt.

5. Verfahren nach Anspruch 1 bis 4, dadurch gekennzeichnet, daß man die Luft oder den Sauerstoff mittels Einspeisevorrichtungen in die Zuführleitungen des Schlammes mit einsaugt.

## Claims

1. A process for the anaerobic decomposition of sewage sludge or organically contaminated waste water to form a fermentation gas containing methane as the primary component, characterized in that such an amount of oxygen is yielded together with the fresh sludge or the waste water that the formed fermentation gas contains a residual oxygen content of 0.01 to 3.0 % by volume.

2. The process according to claim 1, characterized in that the oxygen is added in the form of air.

3. The process of claims 1 or 2, characterized in that the sludge form the first anaerobic fermentation step is supplied to a second anaerobic fermentation step together with such an amount of oxygen that the fermentation gas formed in the second fermentation step also has a residual oxygen content of 0.01 to 3.0 % by volume.

4. The process according to claims 1 to 3, characterized in that the residual oxygen content of the fermentation gas is from 0.1 to 1.5 % by volume.

5. The process according to claims 1 to 4, characterized in that the air or the oxygen is imbibed into the supply pipe of the sludge by means of a feeding device.

**Revendications**

1. Procédé de digestion anaérobie des boues ou de décomposition anaérobie d'eaux usées chargées en matières organiques, avec récupération de biogaz ou gaz de digestion qui contient comme produit principal du méthane, caractérisé en ce qu'en même temps que la boue fraîche ou les eaux usées on amène une telle quantité d'oxygène qu'il est contenu dans le gaz de digestion, qui se forme, une teneur résiduelle en oxygène de 0,01 à 3,0 % en volume.

2. Procédé selon la revendication 1, caractérisé en ce que l'oxygène est amené à l'aide d'air.

3. Procédé selon les revendications 1 ou 2, caractérisé en ce que, aux boues de la première étape de digestion anaérobie qui sont envoyées à une seconde étape de digestion anaérobie, on ajoute encore, lors de l'amenée, de l'air ou de l'oxygène dans une quantité telle que le gaz de digestion se formant dans la seconde étape de digestion contient une teneur résiduelle en oxygène de 0,01 à 3,0 % vol.

4. Procédé selon l'une des revendications 1 à 3, caractérisé en ce que la teneur résiduelle en oxygène dans le gaz de digestion s'élève à 0,1 à 1,5 % vol.

5. Procédé selon l'une des revendications 1 à 4, caractérisé en ce qu'on aspire l'air ou l'oxygène au moyen de dispositifs d'alimentation situés dans les conduites d'amenée des boues.